# EUROPÄISCHE PATENTSCHRIFT

(11) **EP 1 457 688 B1**
(45) Veröffentlichungstag und Bekanntmachung des Hinweises auf die Patenterteilung: **28.12.2005**
(21) Anmeldenummer: 04000901.1
(22) Anmeldetag: 16.01.2004
(51) Int. Cl.: F16B 13/02, E04F 13/08

(54) **Spreizdübel**
Spreading dowel
Cheville à étendre

(30) Priorität: 08.03.2003 DE 20303723 U
(43) Veröffentlichungstag der Anmeldung: 15.09.2004
(73) Patentinhaber: fischerwerke Artur Fischer GmbH & Co. KG, 72178 Waldachtal (DE)
(72) Erfinder: Renz, Jürgen, 72202 Nagold (DE); Haug, Willi, 72250 Freudenstadt (DE)

(56) Entgegenhaltungen:
- EP-A- 1 248 000
- DE-A- 1 906 105
- DE-U1- 20 203 940

## Beschreibung

Die Erfindung betrifft einen Spreizdübel aus Kunststoff insbesondere zur Befestigung einer Dämmstoffplatte oder dgl. an einem Untergrund mit den Merkmalen des Oberbegriffs des Anspruchs 1.

Ein solcher Spreizdübel ist beispielsweise aus EP 1 248 000 A1 bekannt. Der bekannte Spreizdübel ist ein Dämmstoffhalter mit einem durch ein Spreizelement aufspreizbaren Spreizteil sowie einer diesem entgegengesetzten Verlängerung. Das Spreizteil dient insbesondere der Verankerung in einem Untergrund. Die Verlängerung umschließt das Spreizelement und weist einen Halteteller als Kopfflansch zur Bildung eines Widerlagers für den zu befestigenden Dämmstoff auf. Das Spreizteil ist durch Spreizzungen gebildet, die durch Quer- und Längsstege derart miteinander verbunden sind, dass die Spreizzungen einerseits aufspreizbar und andererseits axial stauchbar sind. Der Nachteil eines derart ausgeführten Spreizdübels besteht darin, dass er zwischen den Spreizzungen Öffnungen aufweist und die Spreizzungen beim Stauchen radial ausbauchen. Da als Spreizelement häufig Schrauben oder Nägel aus Metall verwendet werden und diese eine hohe Wärmeleitfähigkeit haben, bildet sich oft am Spreizelement im Bereich der Öffnungen zwischen den Spreizzungen unerwünschtes Kondenswasser. Weiterhin erfordert das Ausbauchen der Spreizzungen, dass das umgebende Material entsprechend radial stauchbar ist. Dies mag bei Dämmstoffen häufig der Fall sein. Sollte der Spreizdübel jedoch zum Befestigen härterer Materialien ähnlich einem Rahmendübel verwendet werden, wird das axiale Stauchen des Spreizdübels durch das umgebende Material unmöglich. Selbst in weicheren Dämmstoffen ist das Ausbauchen nachteilig, da es die Bildung von Hohlräumen mit sich bringt, was sich negativ auf die Dämmeigenschaften auswirkt.

Weiterhin ist aus DE 1 906 105 ein Spreizdübel mit einer Stauchzone im Bereich einer Verlängerung des Spreizteils bekannt. Die Stauchzone ist als dünnwandige Hülse mit einem federartigen, breiten Wulst ausgeführt. Der relativ breite Wulst hat den Nachteil, dass die Kräfte, die zum Stauchen der Verlängerung notwendig sind, relativ hoch ausfallen. Zwar kann der Wulst schmaler ausgeführt werden, jedoch kann dies leicht zu spritztechnischen Schwierigkeiten führen, wenn der Spreizdübel vollständig von einem Ende her ausgespritzt wird. Zum Einen ist in diesem Fall der Durchfluss begrenzt, zum Anderen ist der Fluss beim Ein- und Austritt des flüssigen Materials in den Wulst sehr ungleich über den Umfang verteilt.

Der Erfindung liegt daher die Aufgabe zugrunde, einen Spreizdübel zu schaffen, der eine axiale Stauchzone aufweist, die weder radial ausbaucht noch Öffnungen aufweist. Weiterhin soll der Spreizdübel günstige spritztechnische Eigenschaften aufweisen.

Der Erfindung liegt daher die Aufgabe zugrunde, einen Spreizdübel zu schaffen, der eine axiale Stauchzone aufweist, die weder radial ausbaucht noch Öffnungen aufweist.

Diese Aufgabe wird erfindungsgemäß durch den Spreizdübel mit den Merkmalen des Anspruchs 1 gelöst. Der erfindungsgemäße Spreizdübel weist eine Stauchzone im Bereich der Verlängerung auf. Die Stauchzone wird einerseits durch eine dünnwandige Hülse und andererseits durch eine hieran angelegte Spritzraupe gebildet. Die Hülse ist - ähnlich einer Spritzhaut - so dünnwandig, wie dies spritztechnisch üblicherweise möglich ist. Sie bildet dadurch einerseits eine geschlossene Hülle, wodurch das Spreizelement vollständig vom Spreizdübel umhüllt wird. Andererseits ist sie leicht deformierbar. Bezüglich der geometrischen Ausgestaltung sind neben einer einfachen zylindrischen Hülse mit konstanter Wandstärke auch konische Hülsen mit in axialer Richtung oder Umfangsrichtung variierender Wandstärke denkbar. Allerdings lässt eine derartig dünnwandige Hülse nicht zu, dass das Formnest der Spreizdübel vollständig von einem Ende her ausgespritzt wird, da die Hülse keinen ausreichenden Durchfluss des flüssigen Kunststoffs von einem zum anderen Ende des Spreizdübels erlaubt. Als zusätzlicher Kanal ist daher an der Hülse eine Spritzraupe angeordnet. Diese verbindet zusätzlich die beiden Enden dies- und jenseits der Hülse, so dass ein ausreichender Querschnitt für den Durchfluss des Materials während des Spritzvorgangs gegeben ist. Um das Stauchen des Spreizdübels nicht zu behindern, ist die Spritzraupe wendelförmig angeordnet, da sie sonst versteifend wirkt. Ohne den Erfindungsgedanken zu verlassen, sind daneben aber auch andere Geometrien möglich, wie beispielsweise eine Zick-Zack-Anordnung auf der Oberfläche der Hülse. Ein weiterer Vorteil der Spritzraupen ergibt sich aus der Tatsache, dass die Spritzraupen zwar axial keine Versteifung bewirken, aber dafür die Biegefestigkeit des Stauchbereichs verbessern. Dies ist insbesondere während der Produktion von Bedeutung, da sonst beim Transport des Spreizdübels (noch ohne Spreizelement) die Gefahr bestehen würde, dass der Spreizdübel im Bereich der Stauchzone abbricht oder knickt.

Erfindungsgemäß weist die Stauchzone mehrere Spritzraupen auf, wodurch die einzelnen Spritzraupen gegenüber einer einzigen Spritzraupe einen kleineren Querschnitt aufweisen können und ein gleichmäßigerer Fluss des flüssigen Kunststoffs erreicht wird.

Die Erfindung wird nachfolgend anhand eines in der Zeichnung dargestellten Ausführungsbeispiels näher erläutert. Es zeigen:
- Figur 1: eine Seitenansicht des Spreizdübels; und
- Figur 2: eine Schnittdarstellung des Spreizdübels im Einbauzustand.

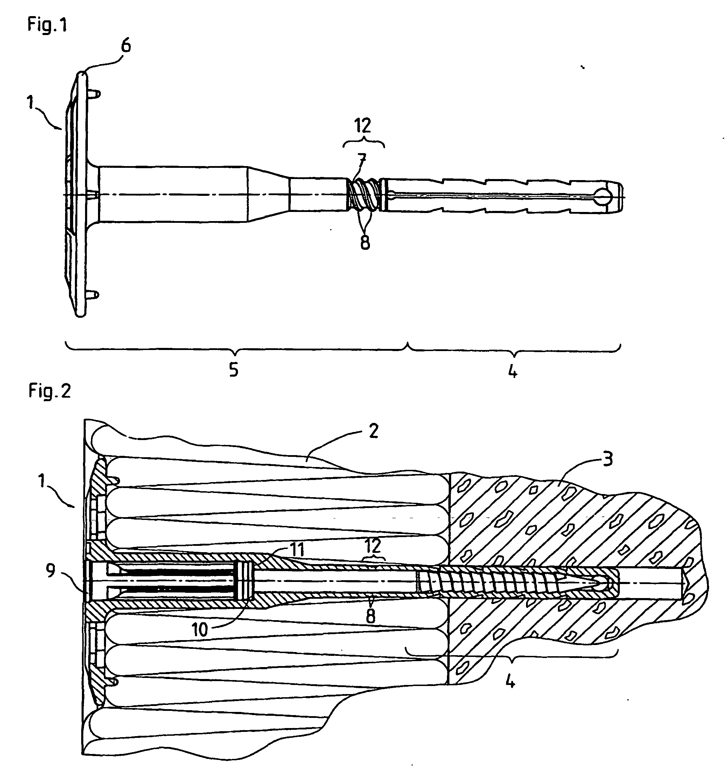

Der in Figur 1 und Figur 2 dargestellte Spreizdübel 1 dient der Befestigung einer Dämmstoffplatte 2 an dem Befestigungsgrund 3. Figur 1 zeigt den Zustand des Spreizdübels 1 vor dem Einbau. Er weist ein aufspreizbares Spreizteil 4 auf, an den sich eine entgegen seinem Einführende gerichtete Verlängerung 5 mit einem Halteteller 6 als Kopfflansch anschließt. Im Bereich der Verlängerung 5 weist der Spreizdübel 1 eine Stauchzone 12 auf, durch die der Spreizdübel 1 axial stauchbar ist. Die Stauchzone 12 weist eine sehr dünnwandige zylindrische Hülse 7 und zwei wendelartig außen an der Hülse 7 angeordnete Spritzraupen 8 auf. Durch diese Geometrie ist der Spreizdübel 1 in diesem Bereich axial stauchbar und gleichzeitig vom Spreizteil 4 her spritzbar. Verdeutlicht wird dies in Figur 2. Durch das schraubende und/oder schlagende Eintreiben des Gewindenagels 9 wird der Spreizdübel 1 im Bereich des Spreizteils 4 verspreizt und hierdurch im Befestigungsgrund 3 verankert. Sobald die Nagelschulter 10 auf der Dübelschulter 11 aufsitzt kommt es zusätzlich zu einem axialen Stauchen des Spreizdübels 1 in der Stauchzone 12. Diese wird im Wesentlichen plastisch verformt, wobei sich die Spritzraupen 8 ähnlich einer Druckfeder aneinander legen. Das Material der Hülse fließt in die verbleibenden Zwischenräume. Da insgesamt in der Stauchzone 12 nur wenig Material vorhanden ist, weitet sich der Spreizdübel 1 in diesem Bereich radial allenfalls geringfügig auf. Hierdurch kommt es zu keinerlei Stauchungen der Dämmstoffplatte 2 oder der Bildung von Hohlräumen. Gleichzeitig bleibt der Spreizdübel 1 geschlossen. Auch der Spreizteil 4 ist weitgehend zumindest durch eine Spritzhaut geschlossen, so dass der Spreiznagel 9 im Wesentlichen vollständig umschlossen ist. Sollte Wasserdampf im Bereich der Dämmstoffplatte 2 vorhanden sein bzw. durch Diffusion eindringen, kann er somit nicht am Spreiznagel 9 kondensieren.

## Patentansprüche

1. Spreizdübel (1) aus Kunststoff, insbesondere zur Befestigung einer Dämmstoffplatte (2) oder dgl. an einem Untergrund (3), mit einem durch Einbringen eines stiftartigen Spreizelements (9) aufspreizbaren Spreizteil (4), an den sich eine entgegen seinem Einführende gerichtete und das Spreizelement (9) umschließende Verlängerung (5) mit einem Kopfflansch (6) anschließt, wobei der Spreizdübel (1) in wenigstens einem Teilstück eine axiale Stauchzone (12) aufweist, und wobei die Stauchzone (12) im Bereich der Verlängerung (5) angeordnet und als dünnwandige Hülse (7) ausgebildet ist, **dadurch gekennzeichnet, dass** die Stauchzone (12) mehrere wendelartig verlaufende Spritzraupen (8) aufweist.

## Claims

1. Expansible fixing plug (1) made of plastics material, especially for affixing a panel (2) of insulating material or the like to a substrate (3), having an expansion portion (4) which is arranged to be spread apart by the introduction of a pin-like expander element (9), which expansion portion (4) is adjoined by an extension piece (5) which is directed in the opposite direction to the insertion end and surrounds the expander element (9) and has a head flange (6), the expansible fixing plug (1) having, in at least one sub-region, an axial compression zone (12), and the compression zone (12) being arranged in the region of the extension piece (5) and being in the form of a thin-walled sleeve (7), **characterized in that** the compression zone (12) has a plurality of injection-moulding ribs (8) which follow a helix-like path.

## Revendications

1. Cheville expansible (1) en matière plastique, en particulier pour la fixation d'un panneau isolant (2) ou élément similaire sur une base (3), comportant une partie expansible (4), qui est apte à s'écarter sous l'effet de l'introduction d'un élément d'expansion (9) en forme de broche et qui est prolongée par une queue (5), qui est dirigée dans le sens opposé à l'extrémité d'introduction de ladite partie expansible et qui entoure l'élément d'expansion (9) et comporte une collerette supérieure (6), la cheville expansible (1) comportant une zone de refoulement (12) axiale dans au moins un tronçon et la zone de refoulement (12) étant agencée dans la partie de la queue (5) et étant conçue sous forme de douille (7) à paroi mince, **caractérisée en ce que** la zone de refoulement (12) comporte plusieurs bourrelets d'injection (8) qui s'étendent sous forme hélicoïdale.
